Europäisches Patentamt

(19) European Patent Office

Office européen des brevets

(11) Publication number: **0 107 658**

**B1**

(12) # EUROPEAN PATENT SPECIFICATION

(45) Date of publication of patent specification: **28.01.87**

(51) int. Cl.⁴: **F 16 B 39/24,** G 05 G 1/00

(21) Application number: **82901900.9**

(22) Date of filing: **10.05.82**

(86) International application number:
**PCT/US82/00622**

(87) International publication number:
**WO 83/04077 24.11.83 Gazette 83/27**

(54) **A LOCKING RETAINER.**

(43) Date of publication of application:
**09.05.84 Bulletin 84/19**

(45) Publication of the grant of the patent:
**28.01.87 Bulletin 87/05**

(84) Designated Contracting States:
**BE DE FR GB**

(56) References cited:
**CH-A- 120 588
FR-A- 888 033
FR-E- 34 748
SU-A- 183 538
US-A- 230 913
US-A- 504 296
US-A-2 473 096
US-A-2 846 897
US-A-3 859 976
US-A-4 114 961**

**"Feinmechanische Bauelemente", S.
Hildebrand, 3rd edition, Carl Hanser Verlag
München-Wien 1978, pages 234-236**

(73) Proprietor: **CATERPILLAR INC.
100 Northeast Adams Street
Peoria Illinois 61629-6490 (US)**

(72) Inventor: **MORRIS, Leslie C.
209 Barbara Parkway
Washington, IL 61571 (US)**
Inventor: **AMDALL, John K.
7009 North Rockvale Drive
Peoria, IL 61614 (US)**

(74) Representative: **Jackson, Peter Arthur et al
GILL JENNINGS & EVERY 53-64 Chancery Lane
London WC2A 1HN (GB)**

## Description

This invention relates to bolt retainers. In particular, it relates to a bolt retainer for use with connecting rods in engines to prevent rotation of the bolt during assembly of the engine.

The connecting rod of an internal combustion engine or a reciprocating compressor is usually affixed to the crankshaft of the engine or compressor by placing a bearing cap opposite the connecting rod about the bearing on the crankshaft and bolting the bearing cap to the connecting rod. In order to accomplish this, the mechanic ordinarily must place a wrench on the bolt head while the nut is tightened on the opposite end of the bolt. In some engines access to the top and bottom of the connecting rod in the vicinity of the crankshaft may be accomplished by rotation of the crankshaft, thereby permitting relatively easy assembly. However, the space available in some engines or compressors makes it impossible to reach the head end of the bolt in order to fix a wrench to the connecting rod bolt head.

It has therefore become the practice to machine a ledge having a flat surface and a vertical back wall on the rod portion of the connecting rod/cap combination so that some sort of locking may be accomplished between the bolt head and connecting rod. The machining process quite frequently will cause a sharp edge or an area of stress concentration in the metal of the connecting rod. After many cycles of the crankshaft, the loads induced into the connecting rod can cause the connecting rod to fail through these areas of stress concentration. Furthermore, the removal of metal in a connecting rod may tend to weaken the connecting rod unnecessarily. In the past, this has been overcome by making a larger forging than necessary in order to achieve the necessary ledge for retaining the bolt head while retaining the required strength.

A single retaining mechanism for a single bolt on a flat surface would be possible, but would rotate unless held stationary. This may be overcome by folding portions of the retainer, one portion folded up against the head of the bolt with the other portion folded down over the material being fastened. Such retainers may, however, be difficult to use.

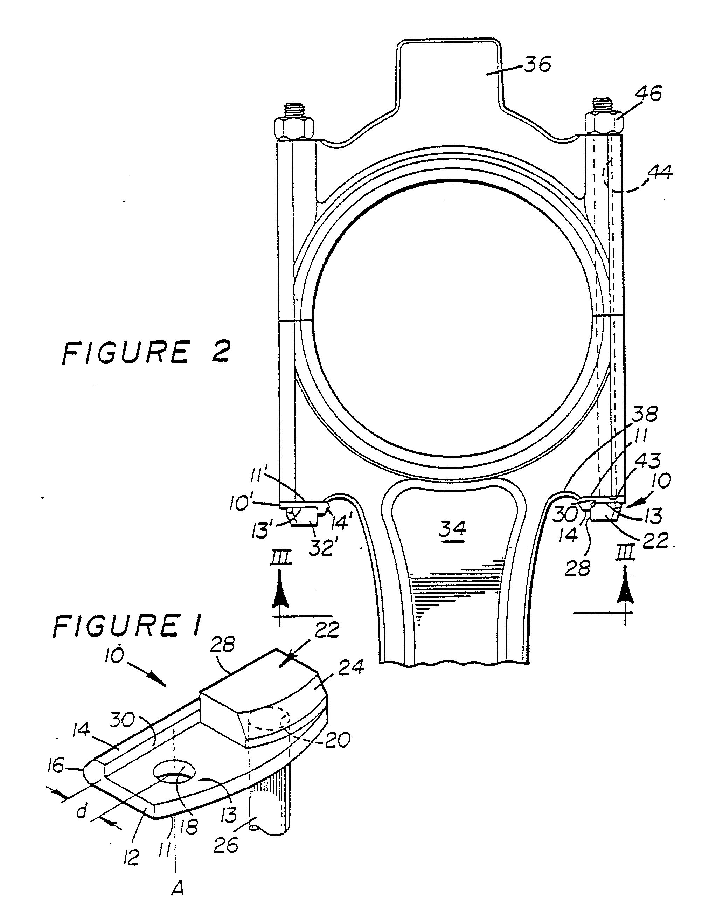

The book "Feinmechanische Bauelemente" by S. Hildebrand (3rd edition, Carl Hanser, Verlag München Wien, 1978) discloses in Figure 2.200d on page 236 a bolt retainer comprising a plate having substantially parallel faces and at least two bores therethrough; and an abutment portion integral with, and projecting from one of the faces of, the plate. This type of bolt retainer will hereinafter be referred to as of the kind described. The abutment portion is made deformable with respect to the plate as it can be bent up into the position at which, in use, it prevents the associated bolt from rotating relatively to the retainer. This means that a bending operation must be effected, often in very cramped conditions, and the abutment portion may, due to the fact that it is deformable, be prone to unbending under loading from the associated bolt.

In accordance with the present invention, a bolt retainer of the kind described is characterized in that the abutment portion is laterally displaced from the line defined by the centres of the bores and is non-deformable with respect to the plate. By being non-deformable with respect to the plate, the abutment portion never has to be bent up into engagement with the associated bolt. This enables the retainer to be used in cramped situations and it also means that there will be no tendency for the associated bolt to start to rotate as a result of having bent the portion out of the way.

In the past, fixture of the bearing cap to a connecting rod in large engines was accomplished by placing the bolt head against a specially machined surface to prevent rotation of the bolt during fixture of the nut thereto. Such an arrangement required not only special machining but special surface treatment of the metal after the machining in order to reduce stress in the metal. The present invention eliminates most of the special machining, which may result in areas of stress concentration, by utilizing a flat surface rather than the use of a ledge while permitting use of bolts without requiring a wrench to hold the bolt during tightening.

Figure 1 is a perspective view of the bolt retainer with one bolt in location which forms an embodiment of the present invention.

Figure 2 is an elevational view of an assembled connecting rod embodying the bolt retainer depicted in Figure 1.

Figure 3 is a sectional view of the connecting rod shown in Figure 2 showing the bolt retainer that forms an embodiment of the present invention.

Figure 4 is a plan view of an alternate embodiment.

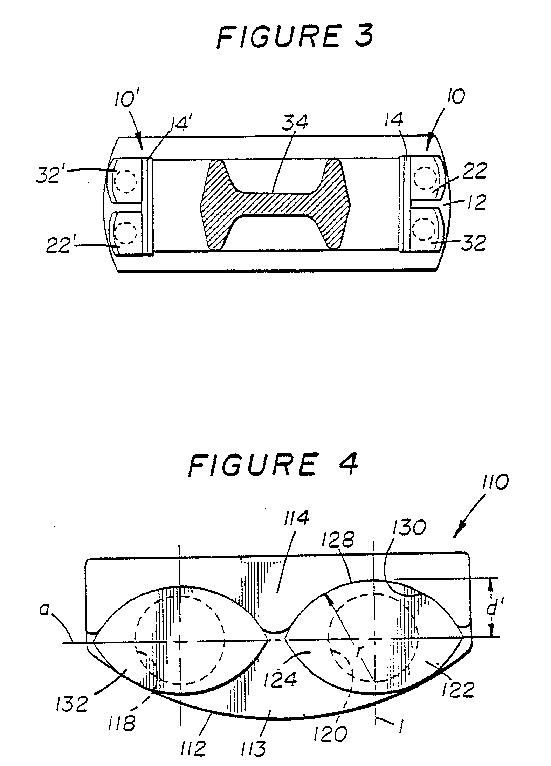

Referring now to Figure 1, a bolt retainer 10 is shown in perspective. While this retainer is particularly useful to facilitate the assembly of large internal combustion engine connecting rods as shown in Figures 2 and 3, it is equally useful in other applications where two or more bolt heads must be held against rotation.

Bolt retainer 10 consists of a flat, non-compressible plate 12 having parallel faces 11 and 13, and having an upstanding abutment portion 14 along one edge 16 of plate 12 normal to face 13. In the preferred embodiment, abutment portion 14 has a flat edge 30 normal to face 13. Formed in plate 12 are at least two bores 18 and 20 positioned so that the distance from flat edge 30 to the axis A of the bore is equal to a predetermined distance "d". It should be noted that the distance "d" is somewhat greater than the radius of each of the bores 18 and 20.

A bolt 22 having a specially formed head 24 is also shown in Figure 1 with the shaft 26 of the bolt extending through one of the bores 20. Head 24 has formed along one edge a flat edge 28 spaced outwardly from the axis of shaft 26 a distance no more than the predetermined distance "d". Preferably, flat edge 28 is spaced from the shaft axis slightly less than the predetermined distance "d" so that with the bolt 22 positioned in bore 20, flat edge 28 abuts flat edge 30 of upstanding portion 14. While the remaining faces of bolt head 24 may be of any shape, it may be appropriate to form those faces in the manner depicted in Figure 1. It should be noted that bore 18 should be spatially separated from bore 20 so that a second bolt 32 may be used in conjunction with the first bolt 22, thereby preventing rotation of plate 12. Nonrotation of plate 12 with the flat edges of the heads of bolts 22 and 32 abutting flat edge 30 permits fixture of nuts on the bolts without use of a wrench on the bolt head.

Referring now to Figures 2 and 3, the bolt retainer 10 may be seen used in conjunction with a connecting rod 34 of an internal combustion engine or compressor. Connecting rod 34 includes a bearing cap 36 which is fixed to the connecting rod 34 by a plurality of bolts, in this case four. It should be noted that bolt retainer 10 is used on both sides of connecting rod 34 and is denoted accordingly as 10 and 10'. Reference will be made to the unprimed numerals; however, the description is equally applicable to the primed numerals.

Bolt retainer 10 is placed adjacent a flat surface 43 of connecting rod 34 so that bolts 22 and 32 may be passed through bores such as bore 44. Bearing cap 36 may then be positioned over the crankshaft (not shown) and nuts 46 threaded onto bolts 22 and 32. Bolt 32 is then positioned as shown in Figure 2 with flat edge 28 adjacent flat edge 30 of bolt retainer 10. With the second bolt 22 in position as shown in Figure 3, the nut 46 may be tightened on bolt 32 without rotation of the bolt. This is accomplished because flat edge 28 is abutting flat edge 30 while the bolt 10 is held in position relative bolt 32 by bolt 22.

Use of bolt retainer 10 eliminates a good deal of machining, therefore allowing a larger fillet 38 to remain after the minimum machining necessary to form flat surface 43. In particular, it eliminates the necessity for machining a ledge into the connecting rod, thereby eliminating a stress concentrator within the connecting rod that must be relieved before installation.

Referring now to Figure 4, an alternate embodiment of the bolt retainer is illustrated. In Figure 4, elements are numbered in the manner of the preferred embodiment except the numbers have been increased by a factor of 100, thus the alternate embodiment of the bolt retainer is numbered 110.

Retainer 110 has a flat portion 112 defining flat surface or face 113 parallel to a second surface (not shown) and an upstanding abutment portion 114 in the manner of the preferred embodiment; however, edge 130 which is normal to face 113, is curvilinear. In the illustrated alternate embodiment, edge 130 corresponds to two connected arcs of circles such that the minimum separation between edge 130 and the centerline of the bores 130 is equal to a predetermined distance d'. It should be noted that in accord with good practice the connection between the arcs is a smooth curve of small radius. The radius of the arcs forming edge 130 is greater than d' and the center of each arc forming edge 130 is located on a line "1" passing through the center of bore 120 and normal to line "a" connecting the centers of the two bores 120.

The bolts 122 and 132 have edges 128 conforming to the arcs forming upstanding abutment portion 114. The shapes of the non-abutting surfaces of bolts 122 and 132 are not to be considered as limited to the depicted shapes; however, symmetrical bolt heads, as shown, may be appropriate. Further, while the surface 130 is depicted as a pair of arcs, other surfaces that would act as an abutment for a conforming edge of a bolt would also be appropriate and are considered to be within the scope of this invention.

While this invention has been shown with specific reference to a connecting rod, it is equally applicable to other machine installations wherein bolts must be tightened while access to the head is impossible or severely restricted.

**Claims**

1. A bolt retainer (10, 110) comprising a plate (12, 112) having substantially parallel faces (11, 13, 113) and at least two bores (18, 20, 118, 120) therethrough; and an abutment portion (14, 114) integral with, and projecting from one of the faces (11, 12, 113) of the plate (12, 112); characterized in that the abutment portion is laterally displaced from the line defined by the centres of the bores (18, 20, 118, 120) and is non-deformable with respect to the plate (12, 112).

2. A bolt retainer according to claim 1, wherein the portion (14) has a flat edge (30) perpendicular to the parallel faces (11, 13) and parallel to the line defined by the centres of the bores (18, 20).

3. A bolt retainer according to claim 1, wherein the portion (114) has a curvilinear edge (130) perpendicular to the parallel faces (113).

4. An assembly comprising a bolt retainer (10, 110) according to any of the preceding claims, a first member (34), a second member (36), and two bolts (22, 32, 122, 132), each bolt having a noncircular head (24, 124) with an edge (28, 128) spaced from the axis of the bolt, and the first and second members (34, 36) being fastened to one another by the bolts (22, 32, 122, 132), each bolt passing through a respective one of the bores (18, 20, 118, 120) of the retainer (10, 110) and being prevented from rotating relative to the retainer (10, 110) by having its edge (28, 128) abutting against the abutment portion (14, 114).

5. An assembly according to claim 4, wherein the first member (34) is a connecting rod (34) having a pair of holes (44) on one side of the longitudinal axis of the rod (34) and the second member (36) is a bearing cap (36) having a pair of holes (44) with the bolts (22, 32, 122, 132) passing through the connecting rod and bearing cap holes (44).

**Patentansprüche**

1. Bolzenhalter (10, 110), der folgendes aufweist:
eine Platte (12, 112) mit im wesentlichen parallelen Stirnflächen (11, 13, 113) und mindestens zwei hindurchgehenden Bohrungen (18, 20, 118, 120), und
ein Anschlagteil (14, 114) einstückig mit der Platte und von einer der Stirnflächen (11, 12, 113) derselben wegragend, dadurch gekennzeichnet, daß der Anschlagteil seitlich gegenüber der Linie versetzt ist, die durch die Mitten der Bohrungen (18, 20, 118, 120) definiert ist, und
ferner dadurch gekennzeichnet, daß der Anschlagteil bezüglich der Platte (12, 112) nichtdeformierbar ist.

2. Bolzenhalter nach Anspruch 1, wobei der Teil (114) eine flache Kante (30) senkrecht zu den Parallelstirnflächen (11, 13) und parallel zur durch die Mitten der Bohrungen (18, 20) definierten Linie aufweist.

3. Bolzenhalter nach Anspruch 1, wobei der Teil (114) eine gekrümmte Kante (130) aufweist, und zwar senkrecht zu den parallelen Stirnflächen (113).

4. Anordnung mit einem Bolzenhalter (10, 110) nach einem der vorhergehenden Ansprüche, einem ersten Glied (34), einem zweiten Glied (36) und zwei Bolzen (22, 32, 122, 132), wobei jeder Bolzen einen nicht kreisförmigen Kopf (24, 124) aufweist, und zwar mit einer Kante (28, 128) mit Abstand angeordnet gegenüber der Bolzenachse, und wobei die ersten und zweiten Glieder (34, 36) aneinander durch die Bolzen (22, 32, 122, 132) befestigt sind, wobei jeder Bolzen durch eine entsprechende der Bohrungen (18, 20, 118, 120) des Halters (10, 110) verläuft und an einer Drehung gegenüber dem Halter (10, 110) dadurch gehindert ist, daß seine Kante (28, 128) an dem Anschlagteil (14, 114) anschlägt.

5. Anordnung nach Anspruch 4, wobei das ersten Glied (34) eine Verbindungsstange (34) ist mit einem Paar von Löchern (44) auf einer Seite der Längsachse der Stange (34), und wobei ferner das zweite Glied (36) eine Lagerkappe (36) ist mit einem Paar von Löchern (44), wobei die Bolzen (22, 32, 122, 132) durch die Verbindungsstange und die Lagerkappenlöcher (44) verlaufen.

**Revendications**

1. Dispositif de retenue de boulon (10, 110) comportant une plaque (12, 112) pourvue de faces (11, 13, 113) sensiblement parallèles et d'au moins deux perçages (18, 20, 118, 120) traversant celle-ci; et une partie formant butée (14, 114) solidaire d'une des faces (11, 12, 113) de la plaque (12, 112) et faisant saillie sur celle-ci; caractérisé en ce que la partie formant butée est décalée latéralement par rapport à la ligne définie par les centres des perçages (18, 20, 118, 120) et n'est pas apte à se déformer par rapport à la plaque (12, 112).

2. Dispositif de retenue de boulon selon la revendication 1, dans lequel la partie (14) possède un bord plat (30) perpendiculaire aux faces parallèles (11, 13) et parallèle à la ligne définie par les centres des perçages (18, 20).

3. Dispositif de retenue de boulon selon la revendication 1, dans lequel la partie (114) possède un bord curviligne (130) perpendiculaire aux faces parallèles (113).

4. Ensemble comportant un dispositif de retenue de boulon (10, 110) selon l'une quelconque des revendications précédentes, un premier organe (34), un second organe (36), et deux boulons (22, 32, 122, 132), chaque boulon possédant une tête non-circulaire (24, 124) dont un bord (28, 128) est situé à une certaine distance de l'axe du boulon, et les premier et second organes (34, 36) étant fixés l'un à l'autre par les boulons (22, 32, 122, 132), chacun des boulons traversant un perçage respectif (18, 20, 118, 120) du dispositif de retenue (10, 110) et étant immobilisé en rotation par rapport au dispositif de retenue (10, 110) par son bord (28, 128) placé en butée contre la partie formant butée (14, 114).

5. Ensemble selon la revendication 4, dans lequel le premier organe (34) est une bielle (34) pourvue de deux trous (44) ménagés sur un côté de l'axe longitudinal de la bielle (34) et le second organe (36) est un chapeau de palier (36) pourvu de deux trous (44), les boulons (22, 32, 122, 132) traversant les trous (44) de la bielle et du chapeau de palier.

FIGURE 2

FIGURE 1

## FIGURE 3

## FIGURE 4